# EUROPÄISCHE PATENTANMELDUNG

(11) **EP 4 167 413 A1**
(43) Veröffentlichungstag der Anmeldung: **19.04.2023**
(21) Anmeldenummer: 22200624.9
(22) Anmeldetag: 10.10.2022
(51) Int. Cl.: H02H 3/02, H02H 7/26, H02H 9/02

(54) **TRENNSCHALTANORDNUNG ZUR ABSICHERUNG EINES FAHRZEUG-BORDNETZES**

(30) Priorität: 18.10.2021 DE 102021126909
(71) Anmelder: Lisa Dräxlmaier GmbH, 84137 Vilsbiburg (DE)
(72) Erfinder: WORTBERG, Michael, 84405 Dorfen (DE)

(57) **Zusammenfassung**

Die Offenbarung betrifft eine Trennschaltanordnung (110) zur Absicherung eines Fahrzeug-Bordnetzes (100) eines Fahrzeugs gegen einen Kurzschluss (101) in einem oder mehreren Pfaden eines an das Fahrzeug-Bordnetz (100) angeschlossenen Stromverteilers (140), wobei die Trennschaltanordnung (110) folgendes umfasst: eine Parallelschaltung aus einem ersten Strompfad (111) und einem zweiten Strompfad (112), die zwischen einen Batterieanschluss (160) des Fahrzeug-Bordnetzes (100) und den Stromverteiler (140) schaltbar ist, wobei der erste Strompfad (111) einen ersten Schalter (120) mit zumindest einem Trennelement (121) umfasst, das ausgebildet ist, bei einem Stromanstieg in dem Stromverteiler (140) ansprechend auf ein Überschreiten eines ersten Stromschwellwerts den ersten Strompfad (111) zu trennen; wobei der zweite Strompfad (112) einen Widerstand (113) umfasst, der ausgebildet ist, einen Stromanstieg in dem zweiten Strompfad auf einen zweiten Stromschwellwert zu begrenzen.

## Beschreibung

### Technisches Gebiet

Die vorliegende Erfindung betrifft eine Trennschaltanordnung zur Absicherung eines Fahrzeug-Bordnetzes zur Absicherung gegen einen Kurzschluss in einem oder mehreren Pfaden eines an das Fahrzeug-Bordnetz angeschlossenen Stromverteilers und ein entsprechendes Verfahren. Insbesondere betrifft die Offenbarung einen FUSI (Funktionalen Sicherheits-) Trennschalter mit Strombegrenzung.

### Stand der Technik

Bei der Auslegung von Stromverteilern im Fahrzeug-Bordnetz, die den FUSI Anforderungen einer unterbrechungsfreien und sicheren Stromversorgung genügen, ergeben sich mit derzeit verfügbaren Stromverteilern Probleme bei der Realisierung zweier wesentlicher Punkte für die funktionale Sicherheit, nämlich 1) der Rückwirkungsfreiheit und 2) der Selektivität.

Derzeit kann die Rückwirkungsfreiheit nicht auf effiziente Weise sichergestellt werden, insbesondere kann nicht garantiert werden, dass ein Kurzschluss in einer untergeordneten elektrischen Komponente, wie z.B. einem Zuheizer, nicht zu einem Spannungseinbruch im Bordnetz führt, und damit sicherheitskritische Systeme wegen Unterspannung abschalten. Üblicherweise wird eine zweite Batterie im Bordnetz benötigt, um eine annähernde Rückwirkungsfreiheit zu gewährleisten, was natürlich aufwendig und mit erheblichen Kosten verbunden ist.

Ferner kann die Selektivität nicht auf effiziente Weise sichergestellt werden, das heißt, dass bei einem Kurzschluss in einem untergeordneten Strompfad, wie zum Beispiel dem des Zuheizers, die Sicherung des Zuheizers auslöst und nicht eine Sicherung in einem übergeordnetem Hauptverteiler. Beim Auslösen der Sicherung im übergeordneten Hauptverteiler werden auch andere (sicherheitskritische) Verbraucher von der Versorgung getrennt. In heute verfügbaren Bordnetz-Stromverteilern ist eine Selektivität bis auf Ebene eines einzelnen Strompfades nicht realisierbar. Derzeit verfügbare elektronische FUSI-Trennschalter verfügen über keine Stufe zur Strombegrenzung, sondern nur über eine Schnellabschaltung im Unterspannungsfall. Bei einem Kurzschluss wird dabei der untergelagerte Stromverteiler komplett abgeworfen, ohne dass die Sicherung auslösen kann.

Die Verwendung von Schmelzsicherungen zur Absicherung zum Beispiel eines Zuheizers ist mit den oben dargestellten Anforderungen an die Rückwirkungsfreiheit und die Selektivität nicht vereinbar.

### Beschreibung der Erfindung

Eine Aufgabe der Erfindung ist es daher, ein vorteilhaftes Konzept zur Auslegung von Stromverteilern im Fahrzeug-Bordnetz, die den FUSI Anforderungen einer unterbrechungsfreien und sicheren Stromversorgung genügen, zu schaffen, insbesondere ein Konzept, mit dem 1) die Rückwirkungsfreiheit und 2) die Selektivität im Fahrzeug-Bordnetz entsprechend den FUSI Anforderungen auf effiziente Weise sichergestellt werden können.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Die erfinderische Lösung basiert auf der Idee, einen FUSI Trennschalter mit einem Widerstand zur Strombegrenzung auszustatten und einem Stromverteiler mit Sicherungen vorzuschalten. Der Widerstand begrenzt den Strom im Falle eines untergelagerten Kurzschlusses dann beispielsweise auf unter 350A. Die Sicherung wird dann mit diesen 350A zur Auslösung gebracht. Ohne diese Strombegrenzung läge der Kurzschlussstrom bis zur Auslösung der Sicherung bei größer 1000A vor mit einer sehr hohen Rückwirkung im Bordnetz.

Die erfinderische Lösung erlaubt einen hybriden Aufbau mit Mischung konventioneller Sicherungen und einer elektronischen FUSI Absicherung. Die erfinderische Lösung ist damit kostenoptimaler realisierbar als eine rein elektronische Absicherung. Trotzdem ist die Rückwirkungsfreiheit für FUSI umsetzbar.

In dieser Offenbarung werden Stromverteiler beschrieben. Ein Stromverteiler ist ein Gerät oder eine Anordnung, z.B. auf einer Leiterplatte, in der Sicherungs- und Schaltelemente zur Verteilung von elektrischer Energie, vornehmlich im Bereich des Niederspannungsnetzes bzw. Fahrzeug-Bordnetzes untergebracht sind. Er befindet sich in praktisch jedem Kraftfahrzeug. Von Stromverteilern führen elektrische Leitungen entweder direkt zu den Verbrauchsstellen, zum Beispiel zu den Sensoren, dem Lüfter oder der Innenraumbeleuchtung im KFZ oder zum nächsten untergeordneten Stromverteiler.

In dieser Offenbarung werden Trennschaltanordnungen und Trennelemente beschrieben. Eine Trennschaltanordnung ist eine Anordnung aus elektrischen und/oder elektronischen Schaltern, als Bestandteil einer elektronischen Schaltung, die die Funktion der Potentialtrennung zwischen zwei oder mehreren Abschnitten der elektronischen Schaltung realisiert, um beispielsweise bei einem Kurzschluss in einem Abschnitt der elektronischen Schaltung eine schädliche Rückwirkung auf die anderen Abschnitte der elektronischen Schaltung zu verhindern.

Ein Trennelement im Sinne dieser Offenbarung ist ein Schalter, insbesondere ein elektronischer Schalter, der die Potentialtrennung zwischen den zwei oder mehreren Abschnitten der elektronischen Schaltung realisiert. Solch ein elektronischer Schalter, auch Analogschalter oder Halbleiterschalter genannt, ist Bestandteil einer elektronischen Schaltung, die die Funktion eines elektromechanischen Schalters realisiert. Dabei können als Schaltelemente bzw. Trennelemente Feldeffekttransistoren (FET), z.B. Metall-Oxid-Halbleiter FETs, und Bipolartransistoren, z.B. IGBTs (Bipolar Transistoren mit isolierter Gate-Elektrode), sowie Dioden zum Einsatz kommen. Im weiteren Sinn können auch Thyristoren und Halbleiterrelais als elektronische Schalter verwendet werden.

In dieser Offenbarung werden MOSFET Transistoren und IGBTs beschrieben. Ein Metall-Oxid-Halbleiter-Feldeffekttransistor (MOSFET) ist eine zu den Feldeffekttransistoren mit isoliertem Gate gehörende Bauform eines Transistors, der sich durch einen Schichtstapel aus einer metallischen Gate-Elektrode, einem Halbleiter und dem dazwischen befindlichem oxidischen Dielektrikum bestimmt. Die Steuerung des Stromflusses im Halbleiterbereich zwischen den beiden elektrischen Anschlüssen Drain und Source erfolgt über eine Steuerspannung an einem dritten Anschluss, dem sogenannten Gate.

IGBTs sind eine Weiterentwicklung des vertikalen Leistungs-MOSFETs. Ein Bipolartransistor mit isolierter Gate-Elektrode ist ein Halbleiterbauelement, das in der Leistungselektronik verwendet wird, da es Vorteile des Bipolartransistors (gutes Durchlassverhalten, hohe Sperrspannung, Robustheit) und Vorteile des Feldeffekttransistors (nahezu leistungslose Ansteuerung) vereinigt.

In dieser Offenbarung werden Kriterien und Anforderungen zur Funktionalen Sicherheit (FUSI) in Fahrzeugen beschrieben. Funktionale Sicherheit bezeichnet den Teil der Sicherheit eines Systems, der von der korrekten Funktion des sicherheitsbezogenen Systems und anderer risikomindernder Maßnahmen abhängt. Die Funktionale Sicherheit wird im Automobil-Bereich üblicherweise in Form von ASIL ("Automotive Safety Integrity Level") Klassen beschrieben. Die ASIL-Klassifikation setzt sich aus verschiedenen Faktoren zusammen, diese sind 1) "Severity - S" entsprechend der Schwere des Fehlers, der Gefährdung des Nutzers oder der Umgebung; 2) "Exposure - E" entsprechend der Eintrittswahrscheinlichkeit, d.h. Häufigkeit und/oder Dauer des Betriebszustands; 3) "Controllability - C" entsprechend der Beherrschbarkeit des Fehlers. Aus diesen Faktoren ergeben sich vier verschiedene ASIL-Level: ASIL A: empfohlene Ausfallwahrscheinlichkeit kleiner 10-6 / Stunde; ASIL B: empfohlene Ausfallwahrscheinlichkeit kleiner 10⁻⁷ / Stunde; ASIL C: geforderte Ausfallwahrscheinlichkeit kleiner 10⁻⁷/ Stunde; ASIL D: geforderte Ausfallwahrscheinlichkeit kleiner 10⁻⁸/ Stunde.

In dieser Offenbarung werden Sicherungen zum Löschen von Überlastströmen, insbesondere Schmelzsicherungen beschrieben. Die elektrische Sicherung bzw. Überstromsicherung unterbricht einen elektrischen Stromkreis, wenn der elektrische Strom eine festgelegte Stromstärke über eine vorgegebene Zeit hinaus überschreitet. Es gibt verschiedene Ausführungen von Überstromsicherungen wie z.B. die Schmelzsicherung, den Leistungsschutzschalter oder auch die Pyro-Sicherung.

Gemäß einem ersten Aspekt wird die oben beschriebene Aufgabe gelöst durch eine Trennschaltanordnung zur Absicherung eines Fahrzeug-Bordnetzes gegen einen Kurzschluss in einem oder mehreren Pfaden eines an das Fahrzeug-Bordnetz angeschlossenen Stromverteilers, wobei die Trennschaltanordnung folgendes umfasst: eine Parallelschaltung aus einem ersten Strompfad und einem zweiten Strompfad, die zwischen einen Batterieanschluss des Fahrzeug-Bordnetzes und den Stromverteiler schaltbar ist, wobei der erste Strompfad einen ersten Schalter mit zumindest einem Trennelement umfasst, das ausgebildet ist, bei einem Stromanstieg in dem Stromverteiler ansprechend auf ein Überschreiten eines ersten Stromschwellwerts den ersten Strompfad zu trennen; wobei der zweite Strompfad einen Widerstand umfasst, der ausgebildet ist, einen Stromanstieg in dem zweiten Strompfad auf einen zweiten Stromschwellwert zu begrenzen.

Die Trennschaltanordnung schafft damit eine vorteilhafte Auslegung von Stromverteilern im Fahrzeug-Bordnetz, die den FUSI Anforderungen einer unterbrechungsfreien und sicheren Stromversorgung genügen. Mit der Trennschaltanordnung genügen diese Stromverteiler den FUSI-Anforderungen an die Rückwirkungsfreiheit und die Selektivität im Fahrzeug-Bordnetz.

Durch die Ausstattung des FUSI Trennschalters mit einem Widerstand zur Strombegrenzung und die Vorschaltung vor einen Stromverteiler mit mehreren Sicherungen kann in vorteilhafter Weise eine Begrenzung des Kurzschlussstroms erzielt werden. Der Widerstand begrenzt den Strom im Falle eines untergelagerten Kurzschlusses dann auf den zweiten Stromschwellwert von beispielsweise 350A oder darunter. Die Sicherung kann dann mit diesem zweiten Stromschwellwert von z.B. 350A zur Auslösung gebracht werden. Ohne diese Strombegrenzung läge der Kurzschlussstrom bis zur Auslösung der Sicherung bei wesentlich höheren Stromstärken, z.B. größer als 1000A und hätte eine sehr hohe Rückwirkung im Bordnetz.

Gemäß einer beispielhaften Ausführungsform der Trennschaltanordnung ist der zweite Stromschwellwert auf einen Auslösestrom einer Sicherung in einem der Pfade des Stromverteilers abgestimmt, um die Sicherung auszulösen, wenn ein Strom in dem zweiten Strompfad der Trennschaltanordnung auf den zweiten Stromschwellwert ansteigt.

Damit wird der technische Vorteil erzielt, dass der Widerstand den Stromanstieg auf den zweiten Stromschwellwert begrenzt, welcher dem Auslösestrom der Sicherung entspricht. D.h. die Sicherung in dem Kurzschlusspfad löst aus und löscht damit den Kurzschlussstrom. Es wird selektiv der Pfad abgeschaltet, in dem der Kurzschluss aufgetreten ist, ohne dass ein ganzer Hauptverteiler außer Betrieb genommen werden muss.

Gemäß einer beispielhaften Ausführungsform der Trennschaltanordnung umfasst der zweite Strompfad der Trennschaltanordnung einen zweiten Schalter mit zumindest einem Trennelement, wobei der zweite Schalter in Serie zu dem Widerstand angeordnet ist.

Damit wird der technische Vorteil erzielt, dass der zweite Schalter (zusammen mit dem ersten Schalter) eine vollständige Trennung des Stromverteilers vom Batterieanschluss vornehmen kann. Dies kann vorteilhaft sein, wenn z.B. im Falle eines Fahrzeug-Crashs, multiple Kurzschlüsse in verschiedenen Pfaden des Stromverteilers vorliegen, welche der Widerstand nicht mehr begrenzen kann. Der Trennschaltanordnung kann hier auch als Klemmenschalter verwendet werden.

Gemäß einer beispielhaften Ausführungsform der Trennschaltanordnung ist das zumindest eine Trennelement des zweiten Schalters ausgebildet, den zweiten Strompfad der Trennschaltanordnung ansprechend auf eine Überlastung des Widerstands zu trennen.

Damit wird der technische Vorteil erzielt, dass der zweite Schalter eine vollständige Trennung des Stromverteilers vom Batterieanschluss vornehmen kann. Bei multiplen Kurzschlüssen im Falle eines Fahrzeug-Crashs teilt sich der Kurzschlussstrom auf die beiden Kurzschlusspfade (erster Strompfad und zweiter Strompfad) auf. Ein Auslösen dauert dann sehr lange, so dass der Widerstand überlastet wird. Mit der Trennschaltanordnung kann auch in diesem Falle eine zügige und zuverlässige Trennung vorgenommen werden.

Gemäß einer beispielhaften Ausführungsform der Trennschaltanordnung ist der zweite Schalter ausgebildet ist, zusammenwirkend mit dem ersten Schalter den Stromverteiler vollständig von dem Batterieanschluss des Fahrzeug-Bordnetzes zu trennen.

Damit wird der technische Vorteil einer vollständigen Trennung des Stromverteilers vom Batterieanschluss erzielt, was die Sicherheit in bestimmten Situationen, wie. z.B. Fahrzeug-Crash erhöht. So kann das Fahrzeug beispielsweise weiterhin gelenkt werden, auch wenn eine Vielzahl von elektronischen Komponenten aufgrund eines Kurzschlusses nicht mehr funktionieren.

Gemäß einer beispielhaften Ausführungsform der Trennschaltanordnung ist das zumindest eine Trennelement des zweiten Schalters als MOSFET oder IGBT Transistor ausgebildet.

Damit wird der technische Vorteil erzielt, dass eine schnelle und zuverlässige Trennung des Stromverteilers vom Batterieanschluss vorgenommen werden kann.

Gemäß einer beispielhaften Ausführungsform der Trennschaltanordnung umfasst der zweite Strompfad der Trennschaltanordnung eine Sicherung, die in Serie zu dem Widerstand angeordnet ist.

Damit wird der technische Vorteil erzielt, dass die Sicherung im Falle von multiplen Kurzschlussströmen am Stromverteiler, die sich zu einem kumulativen Kurzschlussstrom aufsummieren, der den Widerstand überlastet, den zweiten Strompfad zuverlässig trennen kann, so dass auch in diesem Falle sicherheitskritische Komponenten wie die Servolenkung weiterhin zuverlässig arbeiten können.

Gemäß einer beispielhaften Ausführungsform der Trennschaltanordnung ist die Sicherung ausgebildet, den zweiten Strompfad der Trennschaltanordnung ansprechend auf eine Überlastung des Widerstands zu trennen.

Damit wird der technische Vorteil erzielt, dass die Sicherung im Falle einer Überlastung des Widerstands den zweiten Strompfad zuverlässig trennen kann.

Gemäß einer beispielhaften Ausführungsform der Trennschaltanordnung ist die Sicherung thermisch mit dem Widerstand gekoppelt, um die Überlastung des Widerstands zu erfassen.

Damit wird der technische Vorteil erzielt, dass eine Überlastung des Widerstands schnell und zuverlässig erfasst werden kann, und die Sicherung den zweiten Strompfad zuverlässig trennen kann.

Gemäß einer beispielhaften Ausführungsform der Trennschaltanordnung ist die Sicherung ausgebildet, bei einem Temperaturanstieg des Widerstands ansprechend auf ein Überschreiten eines Temperaturschwellwerts auszulösen, um den zweiten Strompfad zu trennen.

Damit wird der technische Vorteil erzielt, dass die Sicherung bei Erreichen ihres vorgegebenen Temperaturschwellwerts schnell und zuverlässig auslösen, beispielsweise schmelzen kann, um den Kurzschluss von den sicherheitskritischen Fahrzeugkomponenten fernzuhalten.

Gemäß einer beispielhaften Ausführungsform der Trennschaltanordnung ist die Sicherung ausgebildet, bei einem Stromanstieg in dem zweiten Strompfad ansprechend auf ein Überschreiten eines vierten Stromschwellwerts den zweiten Strompfad zu trennen, wobei der vierte Stromschwellwert zumindest eine Größenordnung oberhalb des zweiten Stromschwellwerts liegt.

Damit wird der technische Vorteil erzielt, dass die Sicherung eine vollständige Trennung des Stromverteilers vom Batterieanschluss vornehmen kann, wenn z.B. ein multipler Kurzschluss auftritt, bei dem der Strom durch den zweiten Strompfad eine oder mehrere Größenordnungen über dem zweiten Stromschwellwert der Strombegrenzung durch den Widerstand liegt.

Gemäß einer beispielhaften Ausführungsform der Trennschaltanordnung ist das zumindest eine Trennelement des ersten Schalters als MOSFET oder IGBT Transistor ausgebildet.

Damit wird der technische Vorteil erzielt, dass solche MOSFETs und IGBTs Standardbauteile sind, die allgemein verfügbar sind und zudem eine schnelle und zuverlässige Trennung des Stromverteilers vom Batterieanschluss gewährleisten.

Gemäß einer beispielhaften Ausführungsform der Trennschaltanordnung ist der Widerstand in einem Messing-Material ausgeführt.

Damit wird der technische Vorteil erzielt, dass einerseits ein hinreichend großer Widerstand umgesetzt werden kann und andererseits genug thermische Masse zur Verfügung steht, damit die Temperatur des Widerstands hinreichend gering bleibt.

Gemäß einer beispielhaften Ausführungsform der Trennschaltanordnung ist der Widerstand mäanderförmig ausgestaltet und in einem Kunststoffgehäuse eingebettet.

Damit wird der technische Vorteil erzielt, dass der Widerstand platzsparend und robust ausgeführt werden kann und die Wärme über das Kunststoffgehäuse nach außen abgeführt werden kann.

Gemäß einem zweiten Aspekt wird die Aufgabe gelöst durch ein Verfahren zur Absicherung eines Fahrzeug-Bordnetzes eines Fahrzeugs gegen einen Kurzschluss in einem oder mehreren Pfaden eines an das Fahrzeug-Bordnetz angeschlossenen Stromverteilers mittels einer Trennschaltanordnung, die zwischen einen Batterieanschluss des Fahrzeug-Bordnetzes und den Stromverteiler geschaltet ist, wobei die Trennschaltanordnung eine Parallelschaltung aus einem ersten Strompfad und einem zweiten Strompfad umfasst, wobei der erste Strompfad einen ersten Schalter mit zumindest einem Trennelement umfasst, und wobei der zweite Strompfad einen Widerstand umfasst, wobei das Verfahren Folgendes umfasst: Trennen des ersten Strompfades mittels des zumindest einen Trennelements des ersten Schalters bei einem Stromanstieg in dem Stromverteiler ansprechend auf ein Überschreiten eines ersten Stromschwellwerts; und Begrenzen eines Stromanstiegs in dem zweiten Strompfad auf einen zweiten Stromschwellwert mittels des Widerstands in dem zweiten Strom pfad.

Ein solches Verfahren schafft damit eine vorteilhafte Auslegung von Stromverteilern im Fahrzeug-Bordnetz, die den FUSI Anforderungen einer unterbrechungsfreien und sicheren Stromversorgung genügen, insbesondere gemäß den Anforderungen an die Rückwirkungsfreiheit und die Selektivität im Fahrzeug-Bordnetz.

Durch die Ausstattung des FUSI Trennschalters mit einem Widerstand zur Strombegrenzung und die Vorschaltung vor einen Stromverteiler mit mehreren Sicherungen kann mit dem Verfahren in vorteilhafter Weise eine Begrenzung des Kurzschlussstroms erzielt werden. Der Widerstand begrenzt den Strom im Falle eines untergelagerten Kurzschlusses dann auf den zweiten Stromschwellwert von beispielsweise 350A oder darunter. Die Sicherung kann dann mit diesem zweiten Stromschwellwert von z.B. 350A zur Auslösung gebracht werden. Ohne diese Strombegrenzung läge der Kurzschlussstrom bis zur Auslösung der Sicherung bei wesentlich höheren Stromstärken, z.B. größer als 1000A und hätte eine sehr hohe Rückwirkung im Bordnetz.

Gemäß einem dritten Aspekt der Erfindung wird die Aufgabe gelöst durch ein Computerprogramm mit einem Programmcode zum Ausführen des Verfahrens gemäß dem zweiten Aspekt auf einer Steuerung, insbesondere auf einem Mikrocontroller und/oder einem ASIC.

Damit wird der technische Vorteil erreicht, dass das Computerprogramm einfach auf einer Steuerung ausgeführt werden kann.

### Kurze Figurenbeschreibung

Im Folgenden wird die Erfindung anhand von Ausführungsbeispielen und den Figuren näher beschrieben. Es zeigen:
- Fig. 1: ein Schaltbild eines Fahrzeug-Bordnetzes 100 mit einer Trennschaltanordnung 110 gemäß einer ersten Ausführungsform;
- Fig. 2: ein Schaltbild eines Fahrzeug-Bordnetzes 200 mit einer Trennschaltanordnung 210 gemäß einer zweiten Ausführungsform;
- Fig. 3: eine schematische Darstellung eines Widerstands 113 zur Strombegrenzung in einer Trennschaltanordnung 110, 210 gemäß der ersten oder zweiten Ausführungsform;
- Fig. 4: eine schematische Darstellung des Auslösestroms 400 einer 60A Sicherung ohne Strombegrenzung 401 und mit Strombegrenzung 402;
- Fig. 5: eine schematische Darstellung des Sicherungsintegrals 500 der 60A Sicherung ohne Strombegrenzung 501 und mit Strombegrenzung 502;
- Fig. 6: eine schematische Darstellung des Spannungsverlaufs 600 des Bordnetzes bei einer Trennschaltanordnung ohne Strombegrenzung 601 und mit Strombegrenzung 602;
- Fig. 7: eine schematische Darstellung des Spannungsverlaufs 700 am Stromverteiler 140 bei einer Trennschaltanordnung ohne Strombegrenzung 701 und mit Strombegrenzung 702; und
- Fig. 8: eine schematische Darstellung eines Verfahrens 800 zur Absicherung eines Fahrzeug-Bordnetzes gemäß der Offenbarung.

Die Figuren sind lediglich schematische Darstellungen und dienen nur der Erläuterung der Erfindung. Gleiche oder gleichwirkende Elemente sind durchgängig mit den gleichen Bezugszeichen versehen.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

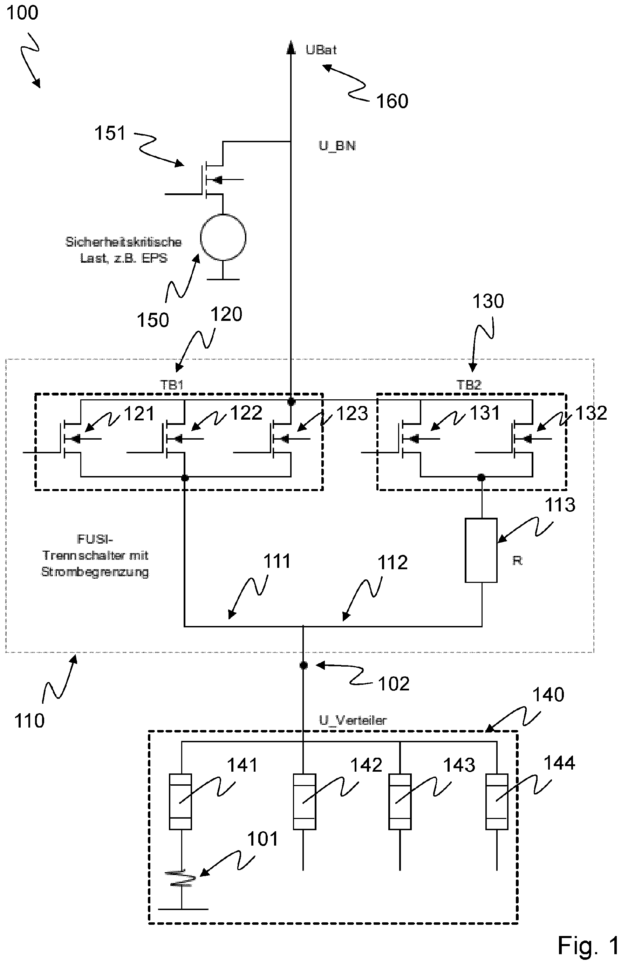

Fig. 1 zeigt ein Schaltbild eines Fahrzeug-Bordnetzes 100 mit einer Trennschaltanordnung 110 gemäß einer ersten Ausführungsform.

Die Trennschaltanordnung 110 dient zur Absicherung des Fahrzeug-Bordnetzes 100 gegen einen Kurzschluss 101 in einem oder mehreren Pfaden eines an das Fahrzeug-Bordnetz 100 angeschlossenen Stromverteilers 140.

Die Trennschaltanordnung 110 umfasst eine Parallelschaltung aus einem ersten Strompfad 111 und einem zweiten Strompfad 112, die zwischen einen Batterieanschluss 160 des Fahrzeug-Bordnetzes 100 und den Stromverteiler 140 geschaltet werden kann.

Der erste Strompfad 111 umfasst einen ersten Schalter 120 mit zumindest einem Trennelement 121, das ausgebildet ist, bei einem Stromanstieg in dem Stromverteiler 140 ansprechend auf ein Überschreiten eines ersten Stromschwellwerts den ersten Strompfad 111 zu trennen. Der Strom in dem Stromverteiler 140 kann beispielsweise anhand einer Messung am Messpunkt 102 bestimmt werden.

Der zweite Strompfad 112 umfasst einen Widerstand 113, der ausgebildet ist, einen Stromanstieg in dem zweiten Strompfad 112 auf einen zweiten Stromschwellwert zu begrenzen.

Der erste Schalter 120 kann beispielsweise als eine erste Transistorbank TB1 realisiert sein. Eine solche erste Transistorbank TB1 umfasst eine oder mehrere Trennelemente 121, 122, 123. In Figur 1 ist eine beispielhafte Anzahl von drei Transistoren 121, 122, 123 dargestellt. Die Anzahl der Transistoren ist auf eine benötigte Stromtragfähigkeit der ersten Transistorbank TB1 abgestimmt.

Der zweite Stromschwellwert ist beispielsweise auf einen Auslösestrom einer Sicherung 141 in einem der Pfade des Stromverteilers 140 abgestimmt, um die Sicherung 141 auszulösen, wenn ein Strom in dem zweiten Strompfad der Trennschaltanordnung 110 auf den zweiten Stromschwellwert ansteigt.

Der zweite Strompfad 112 der Trennschaltanordnung 110 kann einen zweiten Schalter 130 mit zumindest einem Trennelement 131 umfassen, wie in Figur 1 dargestellt, wobei der zweite Schalter 130 in Serie zu dem Widerstand 113 angeordnet ist.

Der zweite Schalter 130 kann beispielsweise als eine zweite Transistorbank TB2 realisiert sein. Eine solche zweite Transistorbank TB2 umfasst eine oder mehrere Trennelemente 131, 132. In Figur 1 ist eine beispielhafte Anzahl von zwei Transistoren 131, 132 als Trennelemente dargestellt. Die Anzahl der Transistoren ist auf eine benötigte Stromtragfähigkeit der zweiten Transistorbank TB2 abgestimmt.

Das zumindest eine Trennelement 131 des zweiten Schalters 130 ist ausgebildet, eine thermische Überlastung des Widerstands 113, z.B. wegen gleichzeitiger Kurzschlüsse mehrerer Lastpfade, durch Abschalten zu verhindern.

Der zweite Schalter 130 ist ausgebildet, zusammenwirkend mit dem ersten Schalter 120 den Stromverteiler 140 vollständig von dem Batterieanschluss 160 des Fahrzeug-Bordnetzes 100 zu trennen. Zum Beispiel können beide Schalter 120, 130 mit einem Steuersignal angesteuert werden, um zu trennen.

Das zumindest eine Trennelement 131 des zweiten Schalters 130 kann beispielsweise als MOSFET oder IGBT Transistor ausgebildet sein. Auch das zumindest eine Trennelement 121 des ersten Schalters 120 kann beispielsweise als MOSFET oder IGBT Transistor ausgebildet sein.

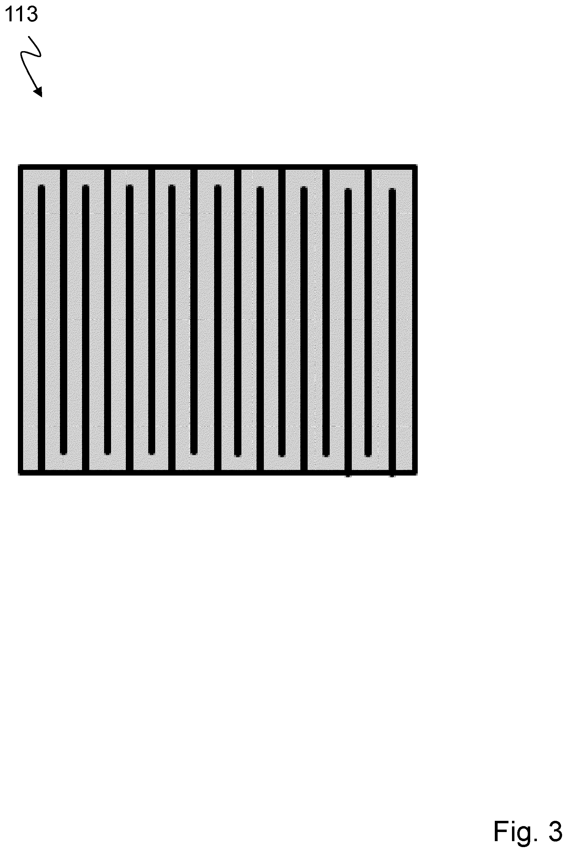

Der Widerstand 113 kann beispielsweise in einem Messing-Material ausgeführt sein. Der Widerstand 113 kann in einer Ausführungsform mäanderförmig ausgestaltet sein, wie z.B. unten zu Figur 3 dargestellt. Der Widerstand 113 kann zudem in einem Kunststoffgehäuse eingebettet sein.

Im Folgenden soll die Funktionsweise der Trennschaltanordnung 110 näher beschrieben werden. Die Trennschaltanordnung 110 wird hier auch als FUSI-Trennschalter mit Strombegrenzung bezeichnet. Sie kann beispielsweise an einen konventionellen Stromverteiler 140 angeschlossen werden, wie in Figur 1 dargestellt.

Zunächst sind beide Transistorbänke TB1 und TB2 leitend. Tritt nun ein Kurzschluss 101 in einer Last in einem Pfad des Stromverteilers 140 auf und steigt der Strom in dem Stromverteiler 140 auf über z.B. 350A (entsprechend dem oben genannten ersten Stromschwellwert) an, so öffnet Transistorbank TB1. Die Ansteuerung kann über eine Strommessung mit Stromschwelle erfolgen, z.B. am Messpunkt 102. Der Strom fließt dann über die Transistorbank TB2 und den Widerstand 113, der beispielsweise 30mOhm betragen kann. Der Widerstand 113 begrenzt den Strom dann auf ca. 300A (entsprechend dem oben genannten zweiten Stromschwellwert).

Die Transistorbank TB2 hat die folgenden Aufgaben: 1) Wenn der FUSI-Schalter 110 auch als Klemmenschalter verwendet wird, dann kann die vollständige Trennung über TB2 erfolgen. 2)

Wenn bei einem Crash multiple Kurzschlüsse auftreten, dann kann der Widerstand 113 die auftretenden Kurzschlussströme nicht mehr tragen und überhitzt. In diesem Fall trennt TB2.

Vorteilhafterweise kann der Widerstand 113 in einem Messing-Material ausgeführt sein. Dieses erlaubt einerseits einen hinreichend großen Widerstand von z.B. 30mOhm umzusetzen, auf der anderen Seite genug thermische Masse aufzuweisen, damit die Temperatur hinreichend gering bleibt.

Bei der Auslösung einer 60A Sicherung müssen circa 400 Joule im Widerstand 113 umgesetzt werden. Ein aus Messing CUZN37 ausgestanzter Mäander von 600mm Länge, 2mm Breite und 1mm Dicke kann die 400J bei einem Temperaturswing von 70K umsetzen, bei einem Widerstand von 30mOhm.

Mit der Trennschaltanordnung 110 können damit die Stromverteiler 140 im Fahrzeug-Bordnetz so ausgelegt werden, dass sie den FUSI Anforderungen einer unterbrechungsfreien und sicheren Stromversorgung genügen. D.h., die Anforderungen an die zwei wesentlichen Punkte für die funktionale Sicherheit, nämlich Rückwirkungsfreiheit und Selektivität werden sichergestellt.

Mit der Trennschaltanordnung 110 kann auf effiziente Weise sichergestellt werden, dass ein Kurzschluss in einer untergeordneten elektrischen Komponente nicht zu einem Spannungseinbruch im Bordnetz 100 führt, und damit sicherheitskritische Systeme, wie zum Beispiel eine elektrische Servolenkung (EPS) 150, wegen Unterspannung abschalten.

Eine solche elektrische Servolenkung (EPS) stellt eine Schlüsseltechnologie für das hochautomatisierte Fahren dar. Die EPS verfügt über einen Elektromotor, der die Fahrzeuglenkung steuert. Mit dem Elektromotor steuert und unterstützt die EPS die Fahrzeuglenkung und sorgt für ein optimales und angenehmes Lenkgefühl. Zusammen mit der Trennschaltanordnung 110 ermöglicht die EPS ein hochautomatisiertes Fahren mit maximaler Sicherheit bis SAE-Level 4.

Mit der Trennschaltanordnung 110 kann ferner die Selektivität auf effiziente Weise sichergestellt werden. Bei einem Kurzschluss 101 in einem untergeordneten Strompfad, wie zum Beispiel dem des Zuheizers, wird sichergestellt, dass die Sicherung 141 des Zuheizers auslöst und nicht eine Sicherung in einem übergeordnetem Hauptverteiler. Damit ist eine Selektivität bis auf Ebene eines einzelnen Strompfades realisierbar.

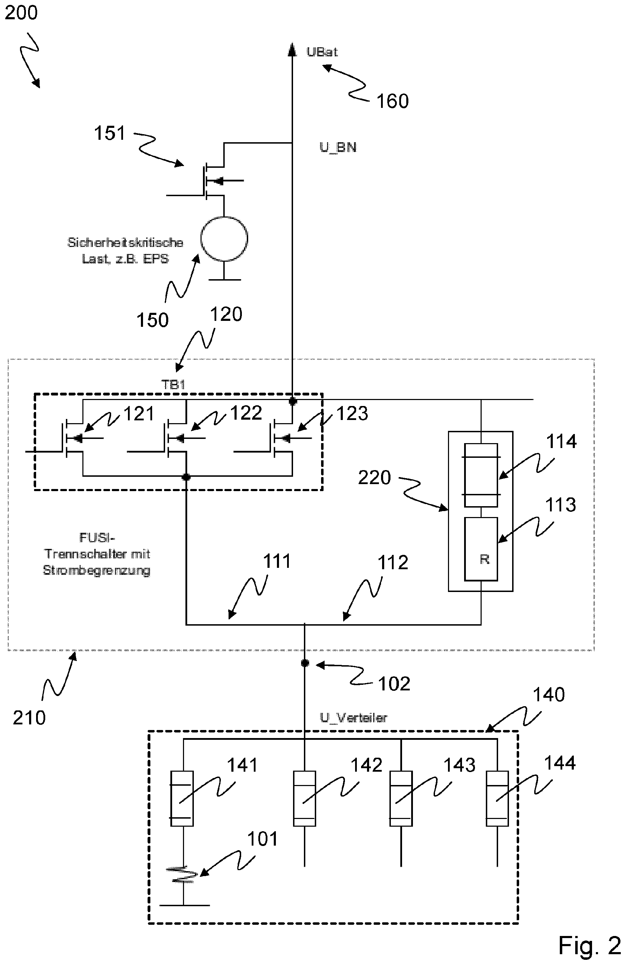

Fig. 2 zeigt ein Schaltbild eines Fahrzeug-Bordnetzes 200 mit einer Trennschaltanordnung 210 gemäß einer zweiten Ausführungsform. Die Trennschaltanordnung 210 ist ähnlich der Trennschaltanordnung 110 gemäß der ersten Ausführungsform ausgeführt, nur dass im zweiten Strompfad 112 kein zweiter Schalter 130 implementiert ist, sondern eine Sicherung 114, die in Serie zu dem Widerstand 113 geschaltet ist.

Die Trennschaltanordnung 210 dient zur Absicherung des Fahrzeug-Bordnetzes 200 gegen einen Kurzschluss 101 in einem oder mehreren Pfaden eines an das Fahrzeug-Bordnetz 200 angeschlossenen Stromverteilers 140.

Die Trennschaltanordnung 210 umfasst eine Parallelschaltung aus einem ersten Strompfad 111 und einem zweiten Strompfad 112, die zwischen einen Batterieanschluss 160 des Fahrzeug-Bordnetzes 200 und den Stromverteiler 140 geschaltet werden kann.

Der erste Strompfad 111 umfasst einen ersten Schalter 120 mit zumindest einem Trennelement 121, wie oben zu Figur 1 beschrieben, das ausgebildet ist, bei einem Stromanstieg in dem Stromverteiler 140 ansprechend auf ein Überschreiten eines ersten Stromschwellwerts den ersten Strompfad 111 zu trennen. Der Strom in dem Stromverteiler 140 kann beispielsweise anhand einer Messung am Messpunkt 102 bestimmt werden.

Der zweite Strompfad 112 umfasst einen Widerstand 113, der ausgebildet ist, einen Stromanstieg in dem zweiten Strompfad 112 auf einen zweiten Stromschwellwert zu begrenzen, wie oben zu Figur 1 beschrieben.

Der erste Schalter 120 kann beispielsweise als eine erste Transistorbank TB1 realisiert sein, wie oben zu Figur 1 beschrieben.

Der zweite Stromschwellwert ist beispielsweise auf einen Auslösestrom einer Sicherung 141 in einem der Pfade des Stromverteilers 140 abgestimmt, um die Sicherung 141 auszulösen, wenn ein Strom in dem zweiten Strompfad der Trennschaltanordnung 110 auf den zweiten Stromschwellwert ansteigt.

Der zweite Strompfad 112 der Trennschaltanordnung 210 umfasst eine Sicherung 114, die in Serie zu dem Widerstand 113 angeordnet ist.

Die Sicherung 114 ist ausgebildet, den zweiten Strompfad 112 der Trennschaltanordnung 210 ansprechend auf eine Überlastung des Widerstands 113 zu trennen. Die Sicherung 114 kann thermisch mit dem Widerstand 113 gekoppelt sein, um die Überlastung des Widerstands 113 zu erfassen. Die Sicherung 114 kann beispielsweise ausgebildet sein, bei einem Temperaturanstieg des Widerstands 113 ansprechend auf ein Überschreiten eines Temperaturschwellwerts auszulösen, um den zweiten Strompfad 112 zu trennen.

Die Sicherung 114 kann beispielsweise ausgebildet sein, bei einem Stromanstieg in dem zweiten Strompfad ansprechend auf ein Überschreiten eines vierten Stromschwellwerts den zweiten Strompfad 112 zu trennen. Der vierte Stromschwellwert kann beispielsweise zumindest eine Größenordnung oberhalb des zweiten Stromschwellwerts liegen. Eine Größenordnung kann hier einen Faktor von 2 bezeichnen.

Das zumindest eine Trennelement 121 des ersten Schalters 120 kann beispielsweise als MOSFET oder IGBT Transistor ausgebildet sein.

Wie oben zu Figur 1 bereits beschrieben, kann der Widerstand 113 beispielsweise in einem Messing-Material ausgeführt sein. Der Widerstand 113 kann in einer Ausführungsform mäanderförmig ausgestaltet sein, wie z.B. unten zu Figur 3 dargestellt. Der Widerstand 113 kann zudem in einem Kunststoffgehäuse eingebettet sein.

Figur 2 zeigt eine zweite Ausführungsform des FUSI-Trennschalters 210 ohne die Transistorbank TB2 wie oben zur ersten Ausführungsform in Bezug auf Figur 1 beschrieben. Diese wurde durch eine Sicherung 114, beispielsweise eine 250A Sicherung (entsprechend dem oben dargestellten vierten Stromschwellwert) mit thermischer Kopplung zum Widerstand 113 ersetzt. Bei einer Überlastung des Widerstandes 113 durch multiplen Kurzschluss wird somit das Auslösen der 250A Sicherung 114 durch die Erhitzung durch den Widerstand 113 beschleunigt.

Fig. 3 zeigt eine schematische Darstellung eines Widerstands 113 zur Strombegrenzung in einer Trennschaltanordnung 110, 210 gemäß der ersten oder zweiten Ausführungsform.

Der Widerstand 113 ist mäanderförmig ausgestaltet und kann beispielsweise in einem Messing-Material ausgeführt sein. Der Widerstand 113 kann zudem in einem Kunststoffgehäuse eingebettet sein.

In einer Ausführungsform kann die Umhüllende circa 45mm x 40mm groß sein. Die Enden können abgewinkelt und zu Kontaktfahnen ausgebildet sein.

Der Widerstandsmäander 113 kann in ein Gehäuse eingespritzt sein, so dass nur die Kontaktfahnen aus dem isolierenden Material herausragen. Die Platine mit der elektronischen Schaltung, welche die Trennschaltanordnung 110, 210 realisiert, kann beispielsweise zwei Lamellenkontakte aufweisen. Damit kann die Platine auf den Gehäuseteil mit eingespritztem Widerstandsmäander 113 aufgesteckt werden.

In einer alternativen Ausführungsform kann der Widerstand 113 über einen Messingdraht aus CuZn37 gewickelt ausgeführt sein. Der Draht kann dann beispielsweise über Laserschweißen mit der Platine verbunden werden.

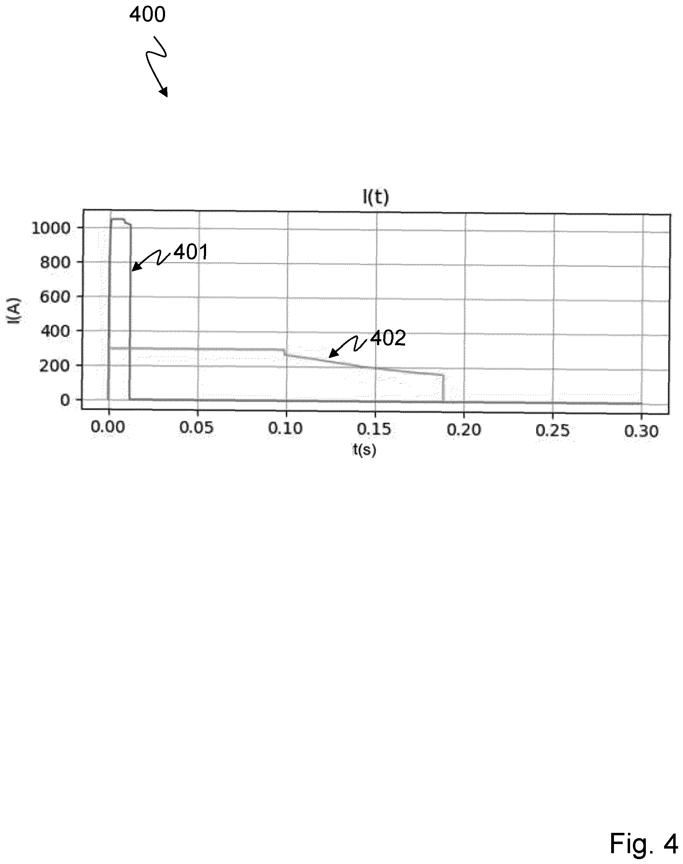

Fig. 4 zeigt eine schematische Darstellung des Auslösestroms 400 einer 60A Sicherung ohne Strombegrenzung 401 und mit Strombegrenzung 402.

Für eine Selektivität muss der Trennschalter 110 mit Strombegrenzung nur in etwa 350A handhaben können, gegenüber 1000A und mehr bei einem Trennschalter ohne Strombegrenzung. Dies hat einen positiven Effekt auf die Kosten des Trennschalters 110. Der Trennschalter 110 kann einfacher ausgeführt sein, so dass eine geringere Anzahl an parallelgeschalteter Transistoren 121, 122, 123 ausreichen, um den Strom zu tragen.

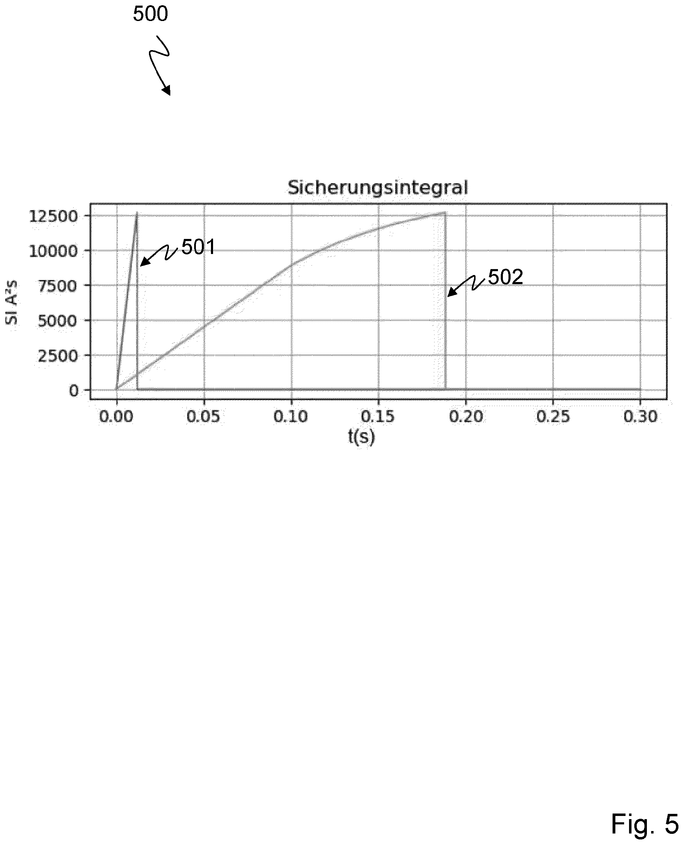

Fig. 5 zeigt eine schematische Darstellung des Sicherungsintegrals 500 der 60A Sicherung ohne Strombegrenzung 501 und mit Strombegrenzung 502.

Die Sicherung mit Strombegrenzung 502 benötigt gegenüber der Sicherung ohne Strombegrenzung 501 eine längere Zeit zum Auslösen. In dieser Darstellung benötigt die Sicherung mit Strombegrenzung 502 etwa 180ms, während die Sicherung ohne Strombegrenzung 501 nach etwa 20ms auslöst.

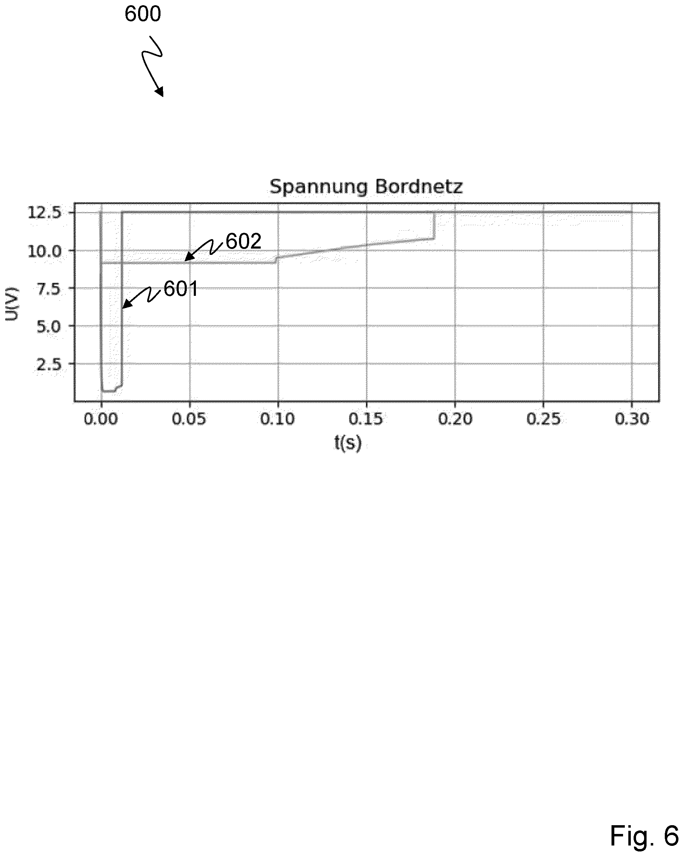

Fig. 6 zeigt eine schematische Darstellung des Spannungsverlaufs 600 des Bordnetzes bei einer Trennschaltanordnung ohne Strombegrenzung 601 und mit Strombegrenzung 602.

Damit stellt Figur 6 die Rückwirkung auf das Bordnetz dar. Ohne Strombegrenzung 601 kommt es für die sicherheitsrelevante Last im Bordnetz zu einem Spannungsabfall auf unterhalb 1V für circa 20ms. Des Weiteren führen die auftretenden Transienten im Bordnetz zu erheblichen Störungen. Mit der Strombegrenzung 602 bleibt der Spannungsabfall auf unkritische 8 bis 9V begrenzt.

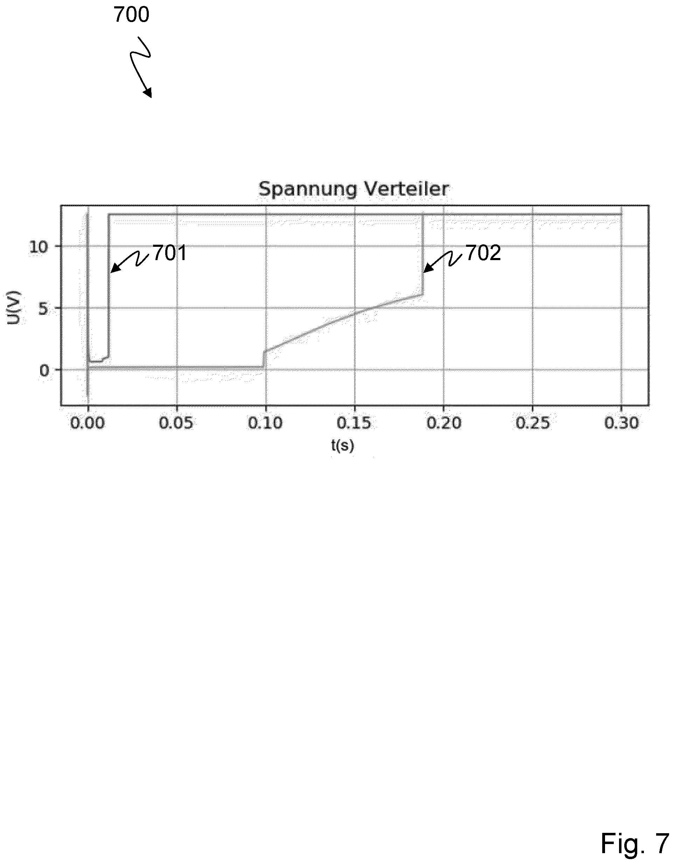

Fig. 7 zeigt eine schematische Darstellung des Spannungsverlaufs 700 am Stromverteiler 140 bei einer Trennschaltanordnung ohne Strombegrenzung 701 und mit Strombegrenzung 702.

Damit zeigt Figur 7 den Spannungseinbruch beim Stromverteiler 140 hinter dem FUSI-Schalter 110. Aufgrund des Spannungsabfalls über dem Widerstand 113 führt die Strombegrenzung zu einem starken Spannungseinbruch auf der Seite des Stromverteilers 140. Da an diesem aber nur unkritische (Komfort-) Funktionen angebunden sind, fällt dieser Sachverhalt aber nicht weiter ins Gewicht.

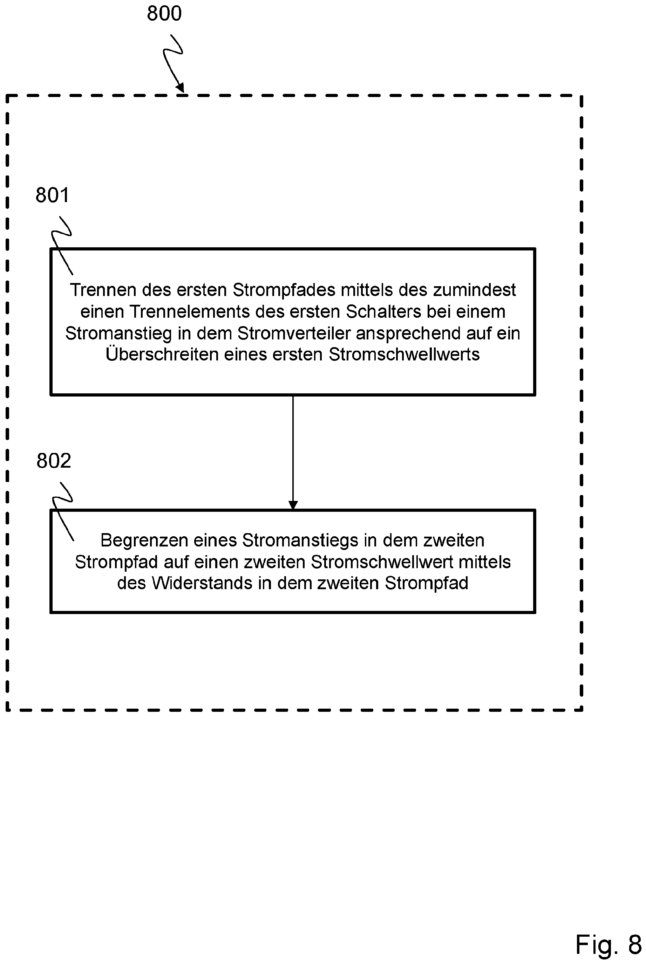

Fig. 8 zeigt eine schematische Darstellung eines Verfahrens 800 zur Absicherung eines Fahrzeug-Bordnetzes gemäß der Offenbarung.

Das Verfahren 800 dient zur Absicherung eines Fahrzeug-Bordnetzes 100, 200, wie oben zu den Figuren 1 und 2 dargestellt, gegen einen Kurzschluss 101 in einem oder mehreren Pfaden eines an das Fahrzeug-Bordnetz 100, 200 angeschlossenen Stromverteilers 140 mittels einer Trennschaltanordnung 110, 210, wie oben zu den Figuren 1 und 2 beschrieben. Die Trennschaltanordnung 110, 210 ist zwischen einen Batterieanschluss 160 des Fahrzeug-Bordnetzes 100, 200 und den Stromverteiler 140 geschaltet, wie oben zu den Figuren 1 und 2 dargestellt. Die Trennschaltanordnung 110, 210 umfasst eine Parallelschaltung aus einem ersten Strompfad 111 und einem zweiten Strompfad 112, wobei der erste Strompfad 111 einen ersten Schalter 120 mit zumindest einem Trennelement 121 umfasst, und wobei der zweite Strompfad 112 einen Widerstand 113 umfasst, wie oben zu den Figuren 1 und 2 beschrieben.

Das Verfahren umfasst die folgenden Schritte:
Trennen 801 des ersten Strompfades 111 mittels des zumindest einen Trennelements 121 des ersten Schalters 120 bei einem Stromanstieg in dem Stromverteiler 140 ansprechend auf ein Überschreiten eines ersten Stromschwellwerts, wie z.B. oben zu den Figuren 1 und 2 beschrieben; und

Begrenzen 802 eines Stromanstiegs in dem zweiten Strompfad 112 auf einen zweiten Stromschwellwert mittels des Widerstands 113 in dem zweiten Strompfad 112, wie z.B. oben zu den Figuren 1 und 2 beschrieben.

Ferner kann ein Computerprogramm mit einem Programmcode zum Ausführen des Verfahrens 800 auf einer Steuerung, z.B. einem Mikroprozessor oder einem ASIC bereitgestellt werden.

### BEZUGSZEICHENLISTE

- 100: Bordnetz mit Trennschaltanordnung gemäß erster Ausführungsform
- 101: Kurzschluss, z.B. im ersten Pfad des Stromverteilers
- 102: Messpunkt zur Strommessung
- 110: Trennschaltanordnung bzw. FUSI Trennschalter mit Strombegrenzung gemäß erster Ausführungsform
- 111: erster Strompfad der Trennschaltanordnung
- 112: zweiter Strompfad der Trennschaltanordnung
- 113: Widerstand zur Strombegrenzung
- 114: Sicherung, z.B. Schmelzsicherung
- 120: erster Schalter
- 121: erstes Trennelement bzw. MOSFET des ersten Schalters
- 122: zweites Trennelement bzw. MOSFET des ersten Schalters
- 123: drittes Trennelement bzw. MOSFET des ersten Schalters
- 130: zweiter Schalter
- 131: erstes Trennelement bzw. MOSFET des zweiten Schalters
- 132: zweites Trennelement bzw. MOSFET des zweiten Schalters
- 140: Stromverteiler
- 141: Sicherung im ersten Pfad des Stromverteilers
- 142: Sicherung im zweiten Pfad des Stromverteilers
- 143: Sicherung im dritten Pfad des Stromverteilers
- 144: Sicherung im vierten Pfad des Stromverteilers
- 150: sicherheitskritische Last, z.B. EPS (Electric Power Steering System bzw. elektrische Lenkung)
- 151: elektronischer Schalter zum Anschalten der sicherheitskritischen Last an die Bordnetzspannung
- 160: Batterieanschluss

- 200: Bordnetz mit Trennschaltanordnung gemäß zweiter Ausführungsform
- 210: Trennschaltanordnung bzw. FUSI Trennschalter mit Strombegrenzung gemäß zweiter Ausführungsform
- 220: Serienschaltung aus Widerstand 113 und Sicherung 114

- 400: Auslösestrom einer Trennschaltanordnung
- 401: Auslösestrom bei Trennschaltanordnung ohne Strombegrenzung
- 402: Auslösestrom bei Trennschaltanordnung mit Strombegrenzung

- 500: Sicherungsintegral einer Trennschaltanordnung
- 501: Sicherungsintegral bei Trennschaltanordnung ohne Strombegrenzung
- 502: Sicherungsintegral bei Trennschaltanordnung mit Strombegrenzung

- 600: Bordnetzspannungsverlauf einer Trennschaltanordnung
- 601: Bordnetzspannungsverlauf bei Trennschaltanordnung ohne Strombegrenzung
- 602: Bordnetzspannungsverlauf bei Trennschaltanordnung mit Strombegrenzung

- 700: Spannungsverlauf am Stromverteiler bei einer Trennschaltanordnung
- 701: Spannungsverlauf am Stromverteiler bei einer Trennschaltanordnung ohne Strombegrenzung
- 702: Spannungsverlauf am Stromverteiler bei einer Trennschaltanordnung mit Strombegrenzung

- 800: Verfahren zur Absicherung eines Fahrzeug-Bordnetzes gegen einen Kurzschluss
- 801: erster Verfahrensschritt
- 802: zweiter Verfahrensschritt

## Patentansprüche

1. Trennschaltanordnung (110, 210) zur Absicherung eines Fahrzeug-Bordnetzes (100, 200) gegen einen Kurzschluss (101) in einem oder mehreren Pfaden eines an das Fahrzeug-Bordnetz (100, 200) angeschlossenen Stromverteilers (140), wobei die Trennschaltanordnung (110, 210) folgendes umfasst:
eine Parallelschaltung aus einem ersten Strompfad (111) und einem zweiten Strompfad (112), die zwischen einen Batterieanschluss (160) des Fahrzeug-Bordnetzes (100) und den Stromverteiler (140) schaltbar ist,
wobei der erste Strompfad (111) einen ersten Schalter (120) mit zumindest einem Trennelement (121) umfasst, das ausgebildet ist, bei einem Stromanstieg in dem Stromverteiler (140) ansprechend auf ein Überschreiten eines ersten Stromschwellwerts den ersten Strompfad (111) zu trennen;
wobei der zweite Strompfad (112) einen Widerstand (113) umfasst, der ausgebildet ist, einen Stromanstieg in dem zweiten Strompfad (112) auf einen zweiten Stromschwellwert zu begrenzen.

2. Trennschaltanordnung (110, 210) nach Anspruch 1,
wobei der zweite Stromschwellwert auf einen Auslösestrom einer Sicherung (141) in einem der Pfade des Stromverteilers (140) abgestimmt ist, um die Sicherung (141) auszulösen, wenn ein Strom in dem zweiten Strompfad der Trennschaltanordnung (110) auf den zweiten Stromschwellwert ansteigt.

3. Trennschaltanordnung (110) nach Anspruch 1 oder 2,
wobei der zweite Strompfad (112) der Trennschaltanordnung (110) einen zweiten Schalter (130) mit zumindest einem Trennelement (131) umfasst,
wobei der zweite Schalter (130) in Serie zu dem Widerstand (113) angeordnet ist.

4. Trennschaltanordnung (110) nach Anspruch 3,
wobei das zumindest eine Trennelement (131) des zweiten Schalters (130) ausgebildet ist,
den zweiten Strompfad (112) der Trennschaltanordnung (110) ansprechend auf eine Überlastung des Widerstands (113) zu trennen.

5. Trennschaltanordnung (110) nach Anspruch 3 oder 4,
wobei der zweite Schalter (130) ausgebildet ist, zusammenwirkend mit dem ersten Schalter (120) den Stromverteiler (140) vollständig von dem Batterieanschluss (160) des Fahrzeug-Bordnetzes (100) zu trennen.

6. Trennschaltanordnung (110) nach einem der Ansprüche 3 bis 5,
wobei das zumindest eine Trennelement (131) des zweiten Schalters (130) als MOSFET oder IGBT Transistor ausgebildet ist.

7. Trennschaltanordnung (210) nach Anspruch 1 oder 2,
wobei der zweite Strompfad (112) der Trennschaltanordnung (110) eine Sicherung (114) umfasst, die in Serie zu dem Widerstand (113) angeordnet ist.

8. Trennschaltanordnung (210) nach Anspruch 7,
wobei die Sicherung (114) ausgebildet ist, den zweiten Strompfad (112) der Trennschaltanordnung (110) ansprechend auf eine Überlastung des Widerstands (113) zu trennen.

9. Trennschaltanordnung (210) nach Anspruch 8,
wobei die Sicherung (114) thermisch mit dem Widerstand (113) gekoppelt ist, um die Überlastung des Widerstands (113) zu erfassen.

10. Trennschaltanordnung (210) nach einem der Ansprüche 7 bis 9,
wobei die Sicherung (114) ausgebildet ist, bei einem Temperaturanstieg des Widerstands (113) ansprechend auf ein Überschreiten eines Temperaturschwellwerts auszulösen, um den zweiten Strompfad (112) zu trennen.

11. Trennschaltanordnung (210) nach einem der Ansprüche 7 bis 10,
wobei die Sicherung (114) ausgebildet ist, bei einem Stromanstieg in dem zweiten Strompfad ansprechend auf ein Überschreiten eines vierten Stromschwellwerts den zweiten Strompfad (112) zu trennen,
wobei der vierte Stromschwellwert zumindest eine Größenordnung oberhalb des zweiten Stromschwellwerts liegt.

12. Trennschaltanordnung (110, 210) nach einem der vorstehenden Ansprüche,
wobei das zumindest eine Trennelement (121) des ersten Schalters (120) als MOSFET oder IGBT Transistor ausgebildet ist.

13. Trennschaltanordnung (110, 210) nach einem der vorstehenden Ansprüche,
wobei der Widerstand (113) in einem Messing-Material ausgeführt ist.

14. Trennschaltanordnung (110, 210) nach einem der vorstehenden Ansprüche,
wobei der Widerstand (113) mäanderförmig ausgestaltet ist und in einem Kunststoffgehäuse eingebettet ist.

15. Verfahren zur Absicherung eines Fahrzeug-Bordnetzes (100, 200) gegen einen Kurzschluss (101) in einem oder mehreren Pfaden eines an das Fahrzeug-Bordnetz (100, 200) angeschlossenen Stromverteilers (140) mittels einer Trennschaltanordnung (110, 210), die zwischen einen Batterieanschluss (160) des Fahrzeug-Bordnetzes (100, 200) und den Stromverteiler (140) geschaltet ist, wobei die Trennschaltanordnung (110, 210) eine Parallelschaltung aus einem ersten Strompfad (111) und einem zweiten Strompfad (112) umfasst, wobei der erste Strompfad (111) einen ersten Schalter (120) mit zumindest einem Trennelement (121) umfasst, und wobei der zweite Strompfad (112) einen Widerstand (113) umfasst, wobei das Verfahren Folgendes umfasst:
Trennen (801) des ersten Strompfades (111) mittels des zumindest einen Trennelements (121) des ersten Schalters (120) bei einem Stromanstieg in dem Stromverteiler (140) ansprechend auf ein Überschreiten eines ersten Stromschwellwerts; und
Begrenzen (802) eines Stromanstiegs in dem zweiten Strompfad (112) auf einen zweiten Stromschwellwert mittels des Widerstands (113) in dem zweiten Strompfad (112).
